# EUROPEAN PATENT SPECIFICATION

(11) **EP 3 096 439 B1**
(45) Date of publication and mention of the grant of the patent: **29.08.2018**
(21) Application number: 16170173.5
(22) Date of filing: 18.05.2016
(51) Int. Cl.: H02J 50/90, H02J 7/02

(54) **WIRELESS CHARGING OPERATION METHOD AND ELECTRONIC DEVICE FOR SUPPORTING THE SAME**
BETRIEBSVERFAHREN ZUM DRAHTLOSEN LADEN UND ELEKTRONISCHE VORRICHTUNG ZUR UNTERSTÜTZUNG DAVON
PROCÉDÉ DE FONCTIONNEMENT DE CHARGE SANS FIL ET DISPOSITIF ÉLECTRONIQUE POUR SUPPORTER CELUI-CI

(30) Priority: 18.05.2015 KR 20150068610
(43) Date of publication of application: 23.11.2016
(73) Proprietor: Samsung Electronics Co., Ltd., Gyeonggi-do 16677 (KR)
(72) Inventor: Hong, Eun Seok, 16536 Suwon-si (KR)
(74) Representative: Nederlandsch Octrooibureau

(56) References cited:
- KR-B1- 101 257 676
- US-A1- 2013 181 724
- US-A1- 2014 266 021

## Description

### BACKGROUND OF THE INVENTION

### 1. Field of the Invention

The present disclosure relates to wireless charging.

### 2. Background of the Invention

An electronic device may include a rechargeable battery. The electronic device on which the rechargeable battery is mounted may charge the rechargeable battery by a wired or wireless charging method. In connection with the wireless charging method, the electronic device may include a receiving (RX) coil which may receive power. Also, there may be a wireless charging device including a transmission (TX) coil for supplying power to the electronic device.

In the wireless charging method, if the RX coil of the electronic device and the TX coil of the wireless charging device are in an error alignment state, power supplied through the TX coil of the wireless charging device may be excessively increased. Also, the electronic device may become heated based on the increase in the power. Therefore, to perform effective charging, there is a need for accurately aligning the RX coil of the electronic device with the TX coil of the wireless charging device. However, since a position of the RX coil disposed in the electronic device of the related art is covered by a case of the electronic device and since a position of the TX coil disposed in the wireless charging device is covered by a case of the wireless charging device, a user of the electronic device may not accurately know where the RX coil and the TX coil are located and how the RX coil and the TX coil are aligned. Therefore, the user may not accurately align the RX coil with the TX coil.

The above information is presented as background information only to assist with an understanding of the present disclosure. No determination has been made, and no assertion is made, as to whether any of the above might be applicable as prior art with regard to the present disclosure.
KR 101 257 676 B1, or more specifically, a machine translation of said document, discloses a wireless charging system wherein a display of the charging device displays the alignment with respect to a charger device, and indicates a user of the charging device to move the charging device in order to reach a specific position.
US 2014/266021 A1 discloses a wireless charging system wherein an indicator in the charging device provides information about the amount of electrical current being transferred from the charger device.
US 2013/181724 A1 discloses a wireless charging system wherein the detection of a charger is in part based on temperature detection.

### SUMMARY OF THE INVENTION

Aspects of the present disclosure are to address at least the above-mentioned problems and/or disadvantages and to provide at least the advantages described below. Accordingly, an aspect of the present disclosure is to provide a wireless charging operation method for providing guide information such that a wireless charging device and an electronic device are more accurately aligned and an electronic device for supporting the same.

In accordance with an aspect of the present disclosure, an electronic device is provided. The electronic device includes a memory configured to store at least one instruction, and a processor configured to electrically connect with the memory and execute the at least one instruction. The at least one instruction executed by the processor is set to output specified guide information based on a sensor signal generated in response to an arrangement state of a receiving (RX) coil of the electronic device, associated with wireless charging with an adjacent external device.

In accordance with another aspect of the present disclosure, a wireless charging operation method is provided. The wireless charging operation method includes receiving a wireless charging related signal from an external device adjacent to an electronic device, obtaining a sensor signal, generated based on an arrangement state of an RX coil of the electronic device associated with wireless charging with the adjacent external device, in response to receiving the wireless charging related signal, and outputting specified guide information based on the sensor signal.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a drawing illustrating a wireless charging system environment according to various embodiments of the present disclosure;
FIG. 2 is a block diagram illustrating a configuration of an electronic device for supporting a wireless charging function according to various embodiments of the present disclosure;
FIG. 3 is a block diagram illustrating a detailed configuration of a wireless charging module according to various embodiments of the present disclosure;
FIG. 4A is a drawing illustrating an alignment state during a wireless charging state according to an embodiment of the present disclosure;
FIG. 4B is a drawing illustrating an alignment state during a wireless charging state according to an embodiment of the present disclosure;
FIG. 5 is a flowchart illustrating a wireless charging operation method according to an embodiment of the present disclosure;
FIG. 6 is a drawing illustrating a screen interface of an electronic device according to various embodiments of the present disclosure;
FIG. 7A is a block diagram illustrating a configuration of a wireless charging system according to various embodiments of the present disclosure;
FIG. 7B is a block diagram illustrating a configuration of a wireless charging system according to various embodiments of the present disclosure;
FIG. 8 is a block diagram illustrating a configuration of an electronic device according to an embodiment of the present disclosure; and
FIG. 9 is a block diagram illustrating a configuration of a program module according to an embodiment of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the disclosure disclosed herein, the expressions "have", "may have", "include" and "comprise", or "may include" and "may comprise" used herein indicate existence of corresponding features (e.g., elements such as numeric values, functions, operations, or components) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The expressions such as "1st", "2nd", "first", or "second", and the like used in various embodiments of the present disclosure may refer to various elements irrespective of the order and/or priority of the corresponding elements, but do not limit the corresponding elements. The expressions may be used to distinguish one element from another element. For instance, both "a first user device" and "a second user device" indicate different user devices from each other irrespective of the order and/or priority of the corresponding elements. For example, a first component may be referred to as a second component and vice versa without departing from the scope of the present disclosure.

It will be understood that when an element (e.g., a first element) is referred to as being "(operatively or communicatively) coupled with/to" or "connected to" another element (e.g., a second element), the element may be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there is no intervening element (e.g., a third element).

Depending on the situation, the expression "configured to" used herein may be used as, for example, the expression "suitable for", "having the capacity to", "designed to", "adapted to", "made to", or "capable of'. The term "configured to" does not mean only "specifically designed to" hardwarily. Instead, the expression "a device configured to" may mean that the device is "capable of' operating together with another device or other components. For example, a "processor configured to perform A, B, and C" may mean a generic-purpose processor (e.g., a central processing unit (CPU) or an application processor (AP)) which may perform corresponding operations by executing one or more software programs which stores a dedicated processor (e.g., an embedded processor) for performing a corresponding operation.

Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude embodiments of the present disclosure.

Electronic devices according to various embodiments of the present disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Moving Picture Experts Group phase 1 or phase 2 (MPEG-1 or MPEG-2) audio layer 3 (MP3) players, mobile medical devices, cameras, or wearable devices (e.g., smart glasses, head-mounted-devices (HMDs), an electronic apparel, electronic bracelets, electronic necklaces, electronic appcessories, electronic tattoos, smart mirrors, or smart watches).

Hereinafter, electronic devices according to various embodiments of the present disclosure will be described with reference to the accompanying drawings. The term "user" used herein may refer to a person who uses an electronic device or may refer to a device (e.g., an artificial electronic device) that uses an electronic device.

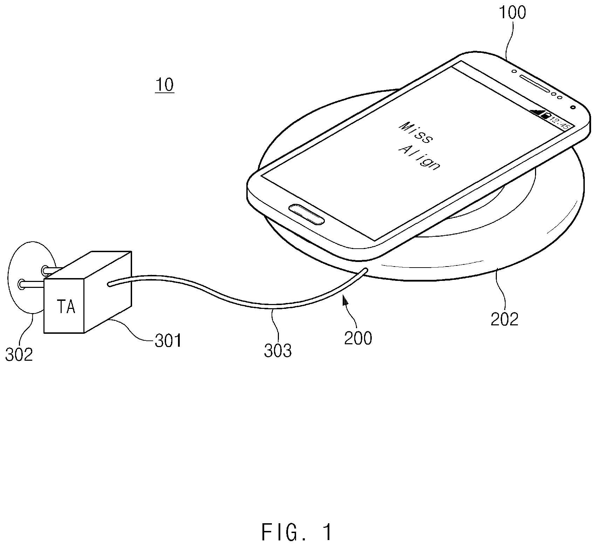

FIG. 1 is a drawing illustrating a wireless charging system environment according to various embodiments of the present disclosure.

Referring to FIG. 1 a wireless charging system environment 10 may include an electronic device 100, a wireless charging device 200, and a power outlet 302.

The wireless charging device 200 may include an adaptor 301 connected with the power outlet 302, a cable 303 connected with the adaptor 301, and a wireless charging pad 202. The wireless charging pad 202 may include a case, a transmission (TX) power circuit, and a TX coil.

In the wireless charging system environment 10, if the adaptor 301 of the wireless charging device 200 connects to the power outlet 302 (e.g., a permanent power supply disposed in a wall and the like or a separate rechargeable device), power of the adaptor 301 may be supplied to the TX power circuit of the wireless charging device 200 through the cable 303. The TX power circuit of the wireless charging device 200 may transmit power, supplied from the power outlet 302, at a predetermined frequency through the TX coil. In the above-mentioned wireless charging device 200, a position of the TX coil may be fixed to a predetermined position of the wireless charging pad 202. According to an embodiment of the present disclosure, the wireless charging pad 202 may be configured with a circle (or a polygon or a shape corresponding to the polygon). The TX coil may be disposed in a certain position relative to a central portion of the wireless charging pad. The TX coil may be wound into a circle to form a certain surface. For example, the TX coil may be wound into a ring shape to actually have a shape of a certain surface. An area of the wireless charging pad 202 may have a size of covering at least part of the electronic device 100. For example, the wireless charging pad 202 may have a size of an area or more of a receiving (RX) coil disposed in the electronic device 100.

The electronic device 100 may have a wireless charging function. In this regard, the electronic device 100 may include the RX coil corresponding to the TX coil of the wireless charging device 200. The RX coil may be located in a rear surface of the electronic device 100 (e.g., in an opposite direction from a position where a display of the electronic device 100 is disposed). The electronic device 100 may collect (or obtain), power supplied through the TX coil, through the RX coil. The electronic device 100 may charge an internal battery using the collected power or may use the obtained power to operate the electronic device 100's functions. According to an embodiment of the present disclosure, the electronic device 100 may detect capacitance formed by an arrangement state of the RX coil and the TX coil. The electronic device 100 may compare a level of the detected capacitance with predetermined values. The electronic device 100 may determine an alignment state between the RX coil and the TX coil based on the level of the detected capacitance. Whether the alignment state is good may correspond to, for example, a size of a surface, where the RX coil and the TX coil are overlapped relative to a vertical direction, in a state where each of the RX coil and the TX coil which are wound to actually form a certain surface is disposed in a horizontal state. Alternatively, whether the alignment state is good may be determined based on a degree to which a central portion of the RX coil and a central portion of the TX coil are identical to each other relative to the vertical direction. As described above, a degree of alignment may refer to a degree to which one surface of the wound RX coil and one surface of the wound TX coil are overlapped with each other. An error alignment state may be, for example, a state where the overlapped degree is less than a specific size. Alternatively, the error alignment state may be a state where a level value of capacitance by the overlapping is less than a specific level.

The electronic device 100 may output guide information corresponding to the result of determining the alignment state. The electronic device 100 may detect a capacitance change corresponding to a position change at a predetermined period or based on occurrence of an event. A user of the electronic device 100 may determine an alignment state, associated with wireless charging, based on the guide information provided from the electronic device 100 and may adjust a position of the electronic device 100.

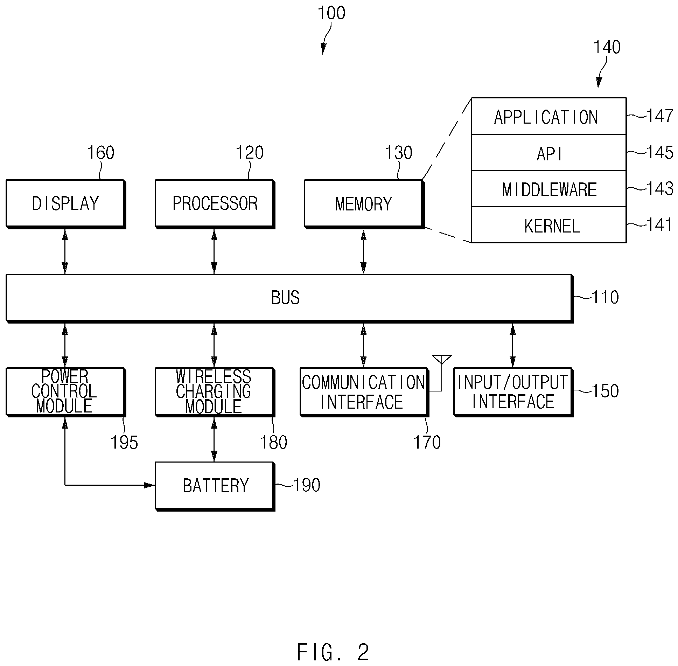

FIG. 2 is a block diagram illustrating a configuration of an electronic device for supporting a wireless charging function according to various embodiments of the present disclosure.

Referring to FIG. 2, an electronic device 100 according to an embodiment of the present disclosure may include a bus 110, at least one processor 120, a memory 130, an input/output interface 150, a display 160, a communication interface 170, a wireless charging module 180, a battery 190, and a power control module 195.

The bus 110 may be, for example, a circuit which connects the components 120, 130, 150, 160, 170 and 180 with each other and transmits communication (e.g., a control message and/or data) between the components. According to an embodiment of the present disclosure, the bus 110 may send a control signal of the wireless charging module 180 to at least one of the display 160 or the processor 120. Alternatively, the bus 110 may send guide information stored in the memory 130 to the display 160 in response to control of the processor 120 or the wireless charging module 180. Alternatively, the bus 110 may send guide information, stored in the memory 130, through the input/output interface 150.

The processor 120 may include one or more of a CPU, an AP, or a communication processor (CP). The processor 120 may perform, for example, calculation or data processing about control and/or communication of at least another of the components of the electronic device 100. According to an embodiment of the present disclosure, the processor 120 may perform at least one of control of communication with a wireless charging device 200 of FIG. 1 or control of charging through the wireless charging device 200. Also, the processor 120 may perform at least one of determination of an alignment between the wireless charging device 200 and the electronic device 100, control of a guide information output based on the alignment state, or control of communication with the wireless charging device 200 based on the alignment state.

The above-mentioned processor 120 may include, for example, the wireless charging module 180 or at least part of the wireless charging module 180. The at least one processor 120 may be replaced with the wireless charging module 180. According to an embodiment of the present disclosure, an AP among the at least one processor 120 may form part of the wireless charging module 180 (e.g., at least part of hardware or software). A CP among the at least processor 120 may form the other part of the wireless charging module 180 (e.g., a component for providing a function associated with supporting a communication function with the wireless charging device 200). According to various embodiments of the present disclosure, the processor 120 may process an instruction associated with determining a wireless charging state, an instruction associated with outputting guide information based on a wireless charging state, and the like. The above-mentioned instructions may be stored in the memory 130.

The memory 130 may include a volatile and/or non-volatile memory. The memory 130 may store, for example, an instruction or data associated with at least another of the components of the electronic device 100. The instruction may be executed by at least one of the processor 120 or the wireless charging module 180. According to an embodiment of the present disclosure, the instruction may include an instruction associated with performing communication with the wireless charging device 200, an instruction associated with determining an alignment state with the wireless charging device 200, and an instruction associated with outputting specified guide information based on the alignment state. The memory 130 may store an information table including guide information based on an alignment state. The information table may include at least one reference value for an aligned form between the wireless charging device 200 and the electronic device 100 and at least one guide information to be output based on the at least one reference value. The guide information may include, for example, at least one of display information, audio information, vibration pattern information, or lamp ON/OFF pattern information.

According to various embodiments of the present disclosure, the memory 130 may software and/or a program 140. The program 140 may include, for example, a kernel 141, a middleware 143, an application programming interface (API) 145, and/or an application program 147 (or an "application"), and the like. At least part of the kernel 141, the middleware 143, or the API 145 may be referred to as an operating system (OS).

The kernel 141 may control or manage, for example, system resources (e.g., the bus 110, the processor 120, the wireless charging module 180, or the memory 130, and the like) used to execute an operation or function implemented in the other programs (e.g., the middleware 143, the API 145, or the application program 147). Also, as the middleware 143, the API 145, or the application program 147 accesses a separate component of the electronic device 100, the kernel 141 may provide an interface which may control or manage system resources.

The middleware 143 may play a role as, for example, a go-between such that the API 145 or the application program 147 communicates with the kernel 141 to communicate data. Also, the middleware 143 may process one work request, received from the application program 147, in the order of priorities. For example, the middleware 143 may provide priorities which may use system resources (the bus 110, the processor 120, the wireless charging module 180, or the memory 130, and the like) of the electronic device 100 to at least one of the application program 147. For example, the middleware 143 may perform scheduling or load balancing for the one work request by processing the one work request in the order of the priorities provided to the at least one of the application program 147.

The API 145 may include, for example, an interface in which the application program 147 controls a function provided from the kernel 141 or the middleware 143. For example, the API 145 may include at least one interface or function (e.g., instruction) for file control, window control, image processing, or text control, and the like.

The application 147 may include a charging application associated with a wireless charging function (or at least one program routine, at least one instruction group, or at least one instruction, and the like, associated with wireless charging). The charging application may support, for example, a communication processing function with the wireless charging device 200 and a function of outputting specified guide information based on an alignment state with the wireless charging state 200. The charging application may be installed in a process of manufacturing the electronic device 100 or may be downloaded and installed from a server device and the like.

The input/output interface 150 may play a role as, for example, an interface which may transmit instructions or data input from a user or another external device to another component (or other components) of the electronic device 100. Also, the input/output interface 150 may output instructions or data received from another component (or other components) of the electronic device 100 to the user or the other external device. The input/output interface 150 may include, for example, at least one physical button, a touch button, a touch pad, or a touch screen, and the like. Also, the input/output interface 150 may include an audio device which processes an audio signal. The audio device may output audio data associated with executing the charging application. According to various embodiments of the present disclosure, the audio device may output audio guide information of guiding to start wireless charging based on approach to the wireless charging device 200 and audio guide information of guiding to end wireless charging based on separation at a predetermined distance or more from the wireless charging device 200, under control of the processor 120 (or control of the wireless charging module 180). Also, the audio device may output audio guide information of guiding a normal alignment state or an error alignment state in response to an alignment state between the electronic device 100 and the wireless charging device 200 under control of the processor 120 (or control of the wireless charging module 180). The above-mentioned audio data output function may be omitted based on settings or a user input.

The display 160 may include, for example, a liquid crystal display (LCD), a light emitting diode (LED) display, an organic LED (OLED) display, a microelectromechanical systems (MEMS) display, or an electronic paper display. The display 160 may display, for example, a variety of content (e.g., text, images, videos, icons, or symbols, and the like) to the user. The display 160 may include a touch screen, and may receive, for example, touch, gesture, proximity, or a hovering input using an electronic pen or part of a body of the user.

The display 160 may output, for example, at least one screen associated with a wireless charging function of the electronic device 100. According to an embodiment of the present disclosure, the display 160 may output display information (or at least one of visual information text, or an image) in response to receiving a scan signal of the wireless charging device 200. Alternatively, the display 160 may output display information associated with establishing a communication channel with the wireless charging device 200. According to various embodiments of the present disclosure, the display 160 may output display information corresponding to a wireless charging start state or a wireless charging end state. According to an embodiment of the present disclosure, the display 160 may output display information based on an alignment state. For example, if the wireless charging device 200 and the electronic device 100 are aligned at a matching rate of a specific level or more, the display 160 may output guide information corresponding to a normal charging state. If the wireless charging device 200 and the electronic device 100 are aligned at a matching rate of less than the specific level, the display 160 may output guide information indicating an error alignment state. The matching rate may correspond to, for example, a capacitance level based on an alignment state between the TX coil of the wireless charging device 200 and the RX coil of the electronic device 100.

The communication interface 170 may support, for example, communication between the electronic device 100 and the wireless charging device 200. According to an embodiment of the present disclosure, the communication interface 170 may receive a scan signal generated at a predetermined period or in response to occurrence of a predetermined event by the wireless charging device 200. The communication interface 170 may establish a communication channel with the wireless charging device 200 and may send a control signal of the electronic device 100 to the wireless charging device 200. Also, if receiving a predetermined signal (e.g., a signal indicating whether the wireless charging device 200 operates normally or abnormally) provided from the wireless charging device 200, the communication interface 170 may send the received predetermined signal to the processor 120 or the wireless charging module 180.

According to various embodiments of the present disclosure, the communication interface 170 may establish a communication channel with an external device. The external device may include, for example, a local-area communication device (e.g., a companion device) (e.g., a watch-type electronic device or a necklace-type electronic device, and the like) which may establish a communication channel with the electronic device 100. Alternatively, the external device may include an electronic device of the same form as that of the electronic device 100. The communication interface 170 may send information, corresponding to a normal alignment state or an error alignment state, and the like to at least one predetermined external device among the external devices under control of the processor 120 or the wireless charging module 180. According to an embodiment of the present disclosure, the external device may include a television (TV) or audio device, a refrigerator, and the like. If the electronic device 100 and the wireless charging device 200 are in an error alignment state, the electronic device 100 may send guide information, indicating the error alignment state, to the TV or audio device, the refrigerator, and the like. The external device may output the received guide information such that the user may recognize that the electronic device 100 is not normally charged (or normal alignment state).

The battery 190 may be disposed as an integral type in the electronic device 100. Alternatively, the battery 190 may be removably disposed on a certain position of the electronic device 100. The battery 190 may be charged by connecting to the wireless charging module 180. The battery 190 may connect to the power control module 195 and may supply power necessary for operating the electronic device 100.

The power control module 195 may connect to the battery 190 and may supply power stored in the battery 190 to predetermined elements (e.g., a display, a CP, an AP, a camera, a microphone, and the like) of the electronic device 100. The power control module 195 may determine the remaining capacity state of the battery 190.

The wireless charging module 180 may process a variety of signals and data associated with a wireless charging function. In this regard, the wireless charging module 180 may be implemented to include the at least one processor 120 or may operate as at least part of the processor 120 to perform the wireless charging function. According to an embodiment of the present disclosure, the wireless charging module 180 may be implemented in the form of software and may be uploaded into the processor 120 to perform the wireless charging function. Alternatively, the wireless charging module 180 may be implemented in the form of independent hardware in connection with performing the wireless charging function to process data associated with the wireless charging function. As described above, the wireless charging module 180 may be implemented in the form of one of software or hardware.

According to an embodiment of the present disclosure, the wireless charging module 180 may determine whether the wireless charging device 200 is adjacent to the electronic device 100 based on a predetermined scheduling task. The wireless charging module 180 may collect, for example, a scan signal sent from the wireless charging device 200 by using the RX coil as an antenna. The wireless charging module 180 may receive a scan signal and may send a response signal corresponding to the scan signal to the wireless charging device 200. If a predetermined signal is received at a strength of a specific level or more from the wireless charging device 200, the wireless charging module 180 may determine to start wireless charging. Also, if a predetermined signal sent from the wireless charging device 200 is changed to a strength of a specific level or more, the wireless charging module 180 may determine to end wireless charging. The wireless charging module 180 may control the display 160 or the input/output interface 150 in response to starting or ending the wireless charging. Also, the wireless charging module 180 may control charging of the battery 190 in response to starting the wireless charging.

According to an embodiment of the present disclosure, if a predetermined signal is received from the wireless charging device 200, the wireless charging module 180 may detect capacitance based on a facing state between the TX coil and the RX coil. The wireless charging module 180 may determine a normal alignment state or an error alignment state based on a level of the capacitance. According to various embodiments of the present disclosure, the wireless charging module 180 may determine a degree of alignment based on a level range value of capacitance corresponding to the normal alignment state and a level range value of capacitance corresponding to the error alignment state.

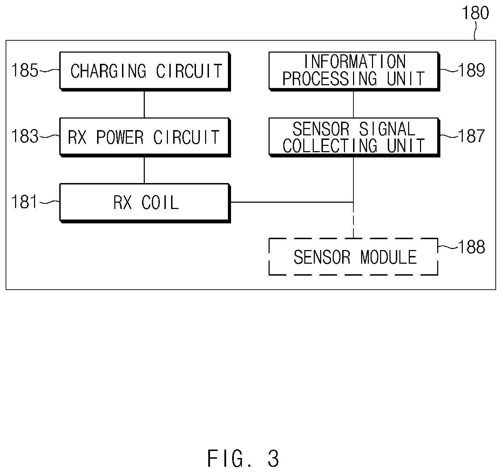

FIG. 3 is a block diagram illustrating a detailed configuration of a wireless charging module according to various embodiments of the present disclosure.

Referring to FIG. 3, the wireless charging module 180 may include, for example, an RX coil 181, an RX power circuit 183, a charging circuit 185, an information processing unit 189, and a sensor signal collecting unit 187. Additionally or alternatively, the wireless charging module 180 may further include a sensor module 188.

The RX coil 181 may have a size or shape corresponding to a TX coil included in the wireless charging device 200 of FIG. 1. Alternatively, the RX coil 181 may be configured in the form of receiving power of a certain level or more, supplied from the TX coil, if the RX coil 181 is aligned with the TX coil in a certain position. According to an embodiment of the present disclosure, the RX coil 181 may form a certain surface by being wound a predetermined number or more of times. Therefore, the RX coil 181 and the TX coil may be disposed at a certain interval by a face-to-face method. According to various embodiments of the present disclosure, the RX coil 181 may play a role as an antenna in a process of performing communication with the wireless charging device 200.

The RX power circuit 183 may connect to the RX coil 181 and may convert power induced to the RX coil 181 into a predetermined waveform. For example, the RX power circuit 183 may convert power induced to the RX coil 181 into a direct current (DC) power and may supply the DC power to the charging circuit 185. The charging circuit 185 may charge the battery 190 of FIG. 2 using the power supplied from the RX power circuit 183. The charging circuit 185 may collect charging state information of the battery 190. The charging circuit 185 may provide the charging state information of the battery 190 to the information processing unit 189 and the like.

The sensor module 188 may connect to the RX coil 181 and may detect a level of capacitance formed in response to an alignment state between the RX coil 181 and the TX coil. The sensor module 188 may send the detected capacitance value to the sensor signal collecting unit 187. According to various embodiments of the present disclosure, the sensor module 188 may not disposed in the wireless charging module 180. According to an embodiment of the present disclosure, the sensor module 188 may include a grip sensor disposed in connection with the communication interface 170 of FIG. 2. The grip sensor may provide a change of capacitance, formed between the RX coil 181 and the TX coil, to the sensor signal collecting unit 187.

The sensor signal collecting unit 187 may collect a sensor signal of the sensor module 188. The sensor signal collecting unit 187 may compare the collected sensor signal (e.g., a capacitance level) with a reference value stored in the memory 130 of FIG. 2. The sensor signal collecting unit 187 may provide the compared result to the information processing unit 189.

The information processing unit 189 may output guide information based on the compared result provided from the sensor signal collecting unit 187. According to an embodiment of the present disclosure, if receiving a compared result corresponding to a normal charging state, the information processing unit 189 may output guide information, indicating the normal charging state, through at least one of the display 160 or the input/output interface 150 of FIG. 2. Alternatively, according to various embodiments of the present disclosure, if determined as the normal charging state, the information processing unit 189 may omit a separate guide information output. Alternatively, the electronic device 100 may have a state set not to output guide information in the normal charging state. According to an embodiment of the present disclosure, if determined as an error alignment state, the information processing unit 189 may output guide information, indicating the error alignment state, through at least one of the display 160 or the input/output interface 150. According to various embodiments of the present disclosure, the information processing unit 189 may output charging efficiency information in response to a level of an error. For example, when an alignment error is higher, the information processing unit 189 may output information about a lower charging efficiency.

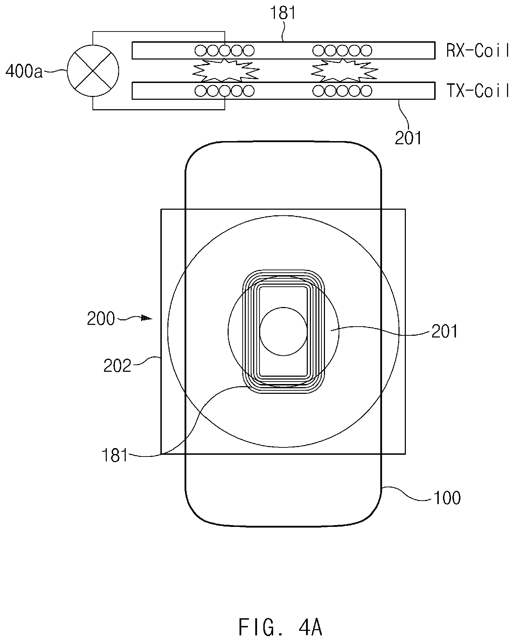

FIG. 4A is a drawing illustrating an alignment state during a wireless charging state according to an embodiment of the present disclosure.

Referring to FIG. 4A, a TX coil 201 of the wireless charging device 200 may be wound to form a surface of a certain size and may be implemented with a circular ring shape, a central portion of which is empty. Also, the RX coil 181 of the electronic device 100 may be wound to form a surface of a certain size and may be implemented with a rectangular ring shape, a central portion of which is empty. The RX coil 181 may be modified based on a mechanical shape of the electronic device 100. For example, the RX coil 181 may be modified into a shape corresponding to a size and shape of the TX coil 201.

If the electronic device 100 is disposed on the wireless charging pad 202 in a state where the wireless charging device 200 is disposed, as shown in FIG. 4A, the TX coil 201 of the wireless charging device 200 and the RX coil 181 of the electronic device 100 may have a first arrangement state. The first arrangement state may be, for example, a normal alignment state in which one side end of the TX coil 210 is identical to one side end of the RX coil 181. According to an embodiment of the present disclosure, this normal alignment state, as shown in FIG. 4A, may be a state in which a central portion of a rear surface of the electronic device 100 is placed on a central portion of the wireless charging pad 202. Capacitance of a first level 400a may be formed between the TX coil 201 and the RX coil 181 in the first arrangement state.

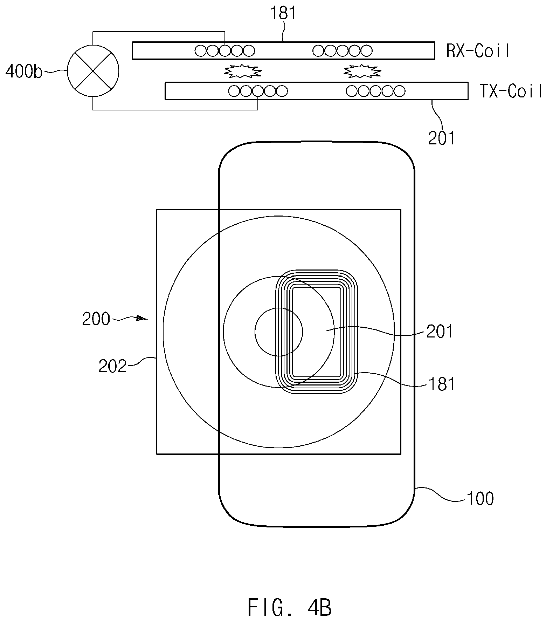

FIG. 4B is a drawing illustrating an alignment state during a wireless charging state according to an embodiment of the present disclosure.

Referring to FIG. 4B, if the electronic device 100 is disposed, in a state where it departs from a certain position, on the wireless charging pad 202 in a state where the wireless charging device 200 is disposed, as shown in FIG. 4B, the TX coil 201 of the wireless charging device 200 and the RX coil 181 of the electronic device 100 may have a second arrangement state. The second arrangement state may be, for example, an error alignment state in which one side end of the TX coil 201 and one side end of the RX coil 181 are disposed to have an error. Alternatively, the second arrangement state may be an error arrangement state (or an error alignment state) in which a central portion of a rear surface of the electronic device 100 departs from a central portion of a wireless charging pad 202. Capacitance of a second level 400b may be formed between the TX coil 201 and the RX coil 181 in the second arrangement state. The second level 400b may be, for example, a value which is less than the first level 400a.

As described above, according to various embodiments of the present disclosure, an electronic device may include a memory, a processor configured to electrically connect with the memory, and at least one instruction set to be executed by the processor and stored in the memory. The at least one instruction executed by the processor may be set to output specified guide information based on a sensor signal generated in response to an arrangement state of an RX coil of the electronic device, associated with wireless charging with an adjacent external device.

According to various embodiments of the present disclosure, the at least one instruction executed by the processor may be set to detect a capacitance level corresponding to the arrangement state and to output guide information corresponding to the detected capacitance level.

According to various embodiments of the present disclosure, the at least one instruction executed by the processor may be set to output guide information indicating an error alignment state if the sensor signal does not meet a predetermined first condition.

According to various embodiments of the present disclosure, the at least one instruction executed by the processor may be set to send a message, for requesting to increase an amount of power supply, to the external device in response to the error alignment state.

According to various embodiments of the present disclosure, the at least one instruction executed by the processor may be set to output guide information indicating a normal alignment state if the sensor signal meets a predetermined first condition.

According to various embodiments of the present disclosure, the at least one instruction executed by the processor may be set to perform a wireless charging operation while outputting guide information, indicating a normal alignment state, during a predetermined time if the sensor signal meets a predetermined first condition.

According to various embodiments of the present disclosure, the at least one instruction executed by the processor may be set to collect the sensor signal if a signal associated with wireless charging is received from the external device.

According to various embodiments of the present disclosure, the at least one instruction executed by the processor may be set to output information about the end of wireless charging if the sensor signal is less than a specific level.

According to various embodiments of the present disclosure, the external device may include a wireless charging device in which a TX coil for supplying an inductive power to the RX coil is disposed.

According to various embodiments of the present disclosure, the electronic device may further include at least one of a display configured to display the guide information, an input and output interface configured to output an audio signal corresponding to the guide information, a vibration element configured to output vibration of a pattern corresponding to the guide information, or a lamp configured to be turned off based on a pattern corresponding to the guide information or be emitted with a color corresponding to the guide information.

According to various embodiments of the present disclosure, the electronic device may further include a communication interface configured to send the guide information to at least one external electronic device in which a communication channel is established.

As described above, according to various embodiments of the present disclosure, an electronic device may include a processor configured to detect a level of capacitance formed between a TX coil of a wireless charging pad and an RX coil of the electronic device if receiving a predetermined signal from a wireless charging device and to output specified guide information if the detected capacitance level corresponds to a predetermined error alignment state and an output device configured to output the guide information under the control of the processor.

According to various embodiments of the present disclosure, the output device may include at least one of a display configured to output display information corresponding to the guide information, an audio device configured to output audio information corresponding to the guide information, a vibration element configured to output vibration of a pattern corresponding to the guide information, a lamp configured to be emitted with a turn ON/OFF pattern or color corresponding to the guide information, or a communication interface configured to send the guide information to a predetermined external electronic device.

According to various embodiments of the present disclosure, the processor may send a message to the output device (e.g., wireless charging device 200), for requesting to increase an amount of power supply, to the wireless charging device such that a level of power obtained through the RX coil is a specific level.

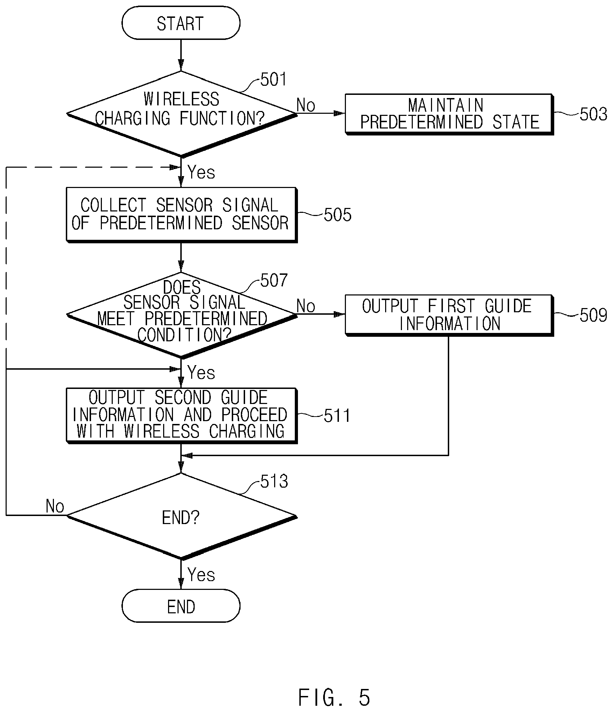

FIG. 5 is a flowchart illustrating a wireless charging operation method according to an embodiment of the present disclosure.

Referring to FIG. 5, in connection with a wireless charging operation method according to an embodiment of the present disclosure, in operation 501, if an event is generated, the electronic device 100 of FIG. 1 may determine whether the generated event is an event associated with executing a wireless charging function. For example, the electronic device 100 may determine whether to receive a message (or a signal) associated with wireless charging from the wireless charging device 200 of FIG. 1. If receiving a predetermined signal, the electronic device 100 may recognize the predetermined signal as a wireless charging function execution event. According to various embodiments of the present disclosure, the electronic device 100 may provide an icon or menu associated with entering a wireless charging function and may recognize a signal, for selecting the corresponding icon or menu, as a wireless charging function execution event.

According to various embodiments of the present disclosure, as the electronic device 100 is placed on a wireless charging pad 202, if a size overlapped in a direction vertical to a TX coil 201 of the wireless charging device 200 and an RX coil 181 of the electronic device 100 (or a level of a sensor signal based on the overlap) is greater than or equal to a specific size, the electronic device 100 may recognize the placement as a wireless charging function execution event. In this regard, the electronic device 100 may operate the sensor module 188 of FIG. 3 at a certain period and may determine whether a predetermined sensor signal is collected. If the wireless charging operation method is operated by this operation, operations 501 and 505 may be integrated into one operation.

If the generated event is not the event associated with executing the wireless charging function, in operation 503, the electronic device 100 may maintain a predetermined state or may execute a function of a type of the generated event. For example, the electronic device 100 may maintain a sleep state. Alternatively, the electronic device 100 may maintain a state (e.g., a music file play state, a video play state, and the like) based on a function being executed before wireless charging. Alternatively, the electronic device 100 may end functions being executed, when executing the wireless charging function, based on settings. In this case, the electronic device 100 may manage a list of functions ended based on the execution of the wireless charging function and may automatically execute the functions recorded in the corresponding list when completing or ending the wireless charging. Alternatively, the electronic device 100 may display the corresponding list such that a user of the electronic device 100 may select a function recorded in the corresponding list. Alternatively, the electronic device 100 may maintain only a predetermined function (e.g., a music or video play function and a communication function) and may end the other functions.

If the generated event is the event associated with executing the wireless charging function, in operation 505, the electronic device 100 may collect a sensor signal of a predetermined sensor. For example, the electronic device 100 may collect a sensor signal of the sensor module 188 (or a grip sensor). The sensor signal may be, for example, a capacitance level value.

In operation 507, the electronic device 100 may determine whether the sensor signal meets a predetermined condition. The predetermined condition may be a condition of determining whether the sensor signal exceeds a predetermined sensor level value or is within a predetermined sensor signal range value.

If the sensor signal does not meet the predetermined condition (e.g., if the sensor signal is less than a first level), in operation 509, the electronic device 100 may output first guide information. The first guide information may include, for example, at least one of display information, audio information, vibration pattern information, lamp ON/OFF pattern information, or lamp color information, indicating an error alignment state. The electronic device 100 may continuously output the first guide information until the electronic device 100 is in a normal alignment state. Alternatively, the electronic device 100 may intermittently output the first guide information and may stop outputting the first guide information after outputting the first guide information a predetermined number or more of times. Alternatively, the electronic device 100 may send the first guide information to at least one of predetermined external devices. According to various embodiments of the present disclosure, the electronic device 100 may maintain a sleep state while not outputting the first guide information.

According to an embodiment of the present disclosure, the electronic device 100 may perform a wireless charging function based on a current state (e.g., a state where the sensor signal is less than the first level). In this regard, the electronic device 100 may request transmission power of a specific level from the wireless charging device 200. For example, the electronic device 100 may request the wireless charging device 200 to increase an amount of power supply such that a wireless charging efficiency has a specific level or such that an RX coil of the electronic device 100 collects a charging current of a specific level. If the RX coil collects the charging current of the specific level, the electronic device 100 may request the wireless charging device 200 to maintain an amount of power supply in a corresponding state. According to various embodiments of the present disclosure, if collecting the charging current of the specific level, the electronic device 100 may enter the sleep state together with proceeding with wireless charging.

According to various embodiments of the present disclosure, in the state where the sensor signal is less than the predetermined condition (e.g., the error alignment state or a state where the sensor signal is less than the first level), the electronic device 100 may be adjusted in position and may be in a state where the sensor signal is greater than or equal to the predetermined condition (e.g., the normal alignment state or a state where the sensor signal is greater than or equal to the first level). In this case, the electronic device 100 may request the wireless charging device 200 (e.g., send a predetermined message to the wireless charging device 200) to decrease an amount of power supply or to be charged relative to an amount of initial power supply.

According to various embodiments of the present disclosure, in the state where the sensor signal is less than the predetermined condition (e.g., the error alignment state or the state where the sensor signal is less than the first level), if the electronic device 100 is adjusted in position (e.g., if the TX coil 201 and the RX coil 181 are spaced apart from each other at a certain distance), the electronic device 100 may be in a situation where the sensor signal is in a specific state (e.g., a state where the sensor signal is less than a second level which is lower than the first level). In this case, the electronic device 100 may request the wireless charging device 200 to be charged with an initial setting. While performing this operation, the electronic device 100 may branch to operation 505 and may perform the operation from operation 505 again.

If the sensor signal meets the predetermined condition (e.g., in the normal alignment or the state where the sensor signal is greater than or equal to the first level), in operation 511, the electronic device 100 may output second guide information and may proceed with the wireless charging. The second guide information may include at least one of visual information, audio information, or tactile information indicating the normal alignment state. According to an embodiment of the present disclosure, the electronic device 100 may omit to output the second guide information while proceeding with the wireless charging. Alternatively, after temporarily outputting the second information while proceeding with the wireless charging, the electronic device 100 may stop outputting the second guide information. While proceeding with the wireless charging, the electronic device 100 may maintain the sleep state.

In operation 513, the electronic device 100 may determine whether an event associated with ending the wireless charging function is generated. If the event associated with ending the wireless charging function is generated, the electronic device 100 may end the wireless charging function or may return to a predetermined function. For example, the electronic device 100 may return to a function being executed before the wireless charging. Alternatively, the electronic device 100 may maintain the sleep state while proceeding with the wireless charging or may maintain the sleep state after ending the wireless charging. According to various embodiments of the present disclosure, if charging is completed through the wireless charging, the electronic device 100 may output charging completion guide information corresponding to the completion. If separated from the wireless charging device 200, the electronic device 100 may output specified guide information (e.g., information indicating that the electronic device 100 is separated from the wireless charging device 200).

If the event associated with ending the wireless charging function is not generated, the electronic device 100 may perform a previous operation, for example, operation 511. Alternatively, according to an embodiment of the present disclosure, the electronic device 100 may branch to operation 505 and may perform the operation from operation 505 again.

According to various embodiments of the present disclosure, a wireless charging operation method may include receiving a wireless charging related signal from an external device adjacent to an electronic device, collecting a sensor signal, formed based on an arrangement state of an RX coil of the electronic device, associated with wireless charging with the adjacent external device, in response to receiving the wireless charging related signal, and outputting specified guide information based on the sensor signal.

According to various embodiments of the present disclosure, the collecting of the sensor signal may include detecting a capacitance level corresponding to the arrangement state.

According to various embodiments of the present disclosure, the outputting of the specified guide information may include outputting guide information corresponding to the detected capacitance level.

According to various embodiments of the present disclosure, the outputting of the specified guide information may include outputting guide information indicating an error alignment state, if the sensor signal does not meet a predetermined first condition.

According to various embodiments of the present disclosure, the method may further include sending a message, for requesting to increase an amount of power supply, to the external device in response to the error alignment state.

According to various embodiments of the present disclosure, the outputting of the specified guide information may include outputting guide information indicating a normal alignment state, if the sensor signal meets a predetermined first condition.

According to various embodiments of the present disclosure, the method may further include performing a wireless charging operation while outputting guide information, indicating a normal alignment state, during a predetermined time, if the sensor signal meets a first condition.

According to various embodiments of the present disclosure, the method may further include outputting information about the end of wireless charging, if the sensor signal is less than a specific level.

According to various embodiments of the present disclosure, the outputting of the specified guide information may include at least one of outputting display information corresponding to the guide information, outputting an audio signal corresponding to the guide information, outputting vibration of a pattern corresponding to the guide information, turning on/off a lamp based on a pattern corresponding to the guide information, or emitting the lamp using a color corresponding to the guide information.

According to various embodiments of the present disclosure, the outputting of the specified guide information may include sending the guide information to an external electronic device in which a communication channel is established.

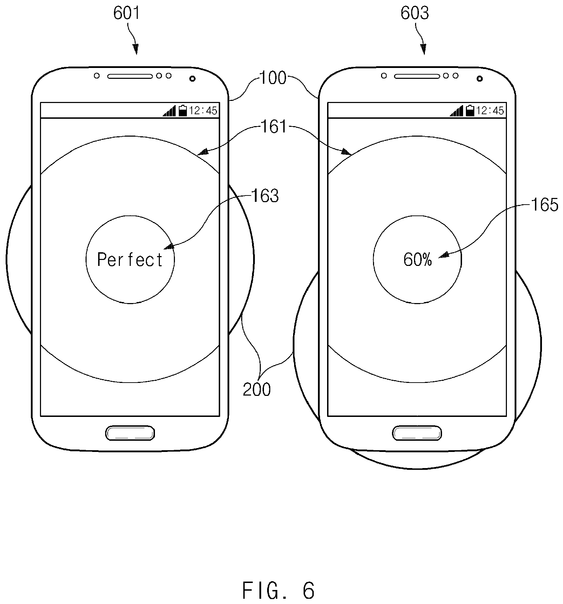

FIG. 6 is a drawing illustrating a screen interface of an electronic device according to various embodiments of the present disclosure.

Referring to FIG. 6, in state 601, if the electronic device 100 and the wireless charging device 200 are disposed in a normal alignment state, a display 160 of the electronic device 100 may output a first guide information screen indicating the normal alignment state. For example, a first object 161 may be displayed on a certain position of the first guide information screen, and a second object 163 may be displayed on the center of the first guide information screen. The second object 163 may include information (e.g., text or an image) indicating the normal alignment state. In FIG. 6, an embodiment of the present disclosure is exemplified as the second object 163 includes text indicating the normal alignment state. However, the scope of the present disclosure may not be limited thereto. For example, the text may be replaced with a predetermined image or may be output together with an image.

As described above, the normal alignment state may be a state in which a sensor signal (e.g., capacitance), generated by overlapping the RX coil 181 of the electronic device 100 with the TX coil 201 of the wireless charging device 200, meets a predetermined condition. The predetermined condition may be, for example, a condition in which the RX coil 181 detects capacitance of a first level (or a first range).

According to various embodiments of the present disclosure, in state 603, if the electronic device 100 and the wireless charging device 200 are disposed in an error alignment state, the display 160 of the electronic device 100 may output a second guide information screen indicating the error alignment state. For example, the first object 161 may be disposed on a certain position of the second guide information screen, and a third object 165 may be disposed in the center of the second guide information screen. The third object 165 may include information (e.g., text or an image) indicating the error alignment information. The third object 165 may be replaced with at least one of text of another form or an image of another form.

As described above, the error alignment state may be a state in which a sensor signal (e.g., capacitance), generated by overlapping the RX coil 181 of the electronic device 100 with the TX coil 201 of the wireless charging device 200, does not meet the predetermined condition. The state in which the sensor signal does not meet the predetermined condition may be a state where the RX coil 181 detects capacitance of a second level (e.g., a level which is lower than the first level or a second range which is narrower than the first range).

According to various embodiments of the present disclosure, a size of the first object 161 may be set to correspond to part of the wireless charging device 200. Therefore, a user of the electronic device 100 may arrange the electronic device 100 on the wireless charging device 200 while verifying the first object 161. If receiving a predetermined signal from the wireless charging device 200 (e.g., if receiving a scan signal sent from the wireless charging device 200), the electronic device 100 may output the first object 161 on the display 160. If a predetermined time elapses after outputting the first object 161 and the second object 162, the electronic device 100 may stop outputting the first object 161 and the second object 162 and may turn off the display 160.

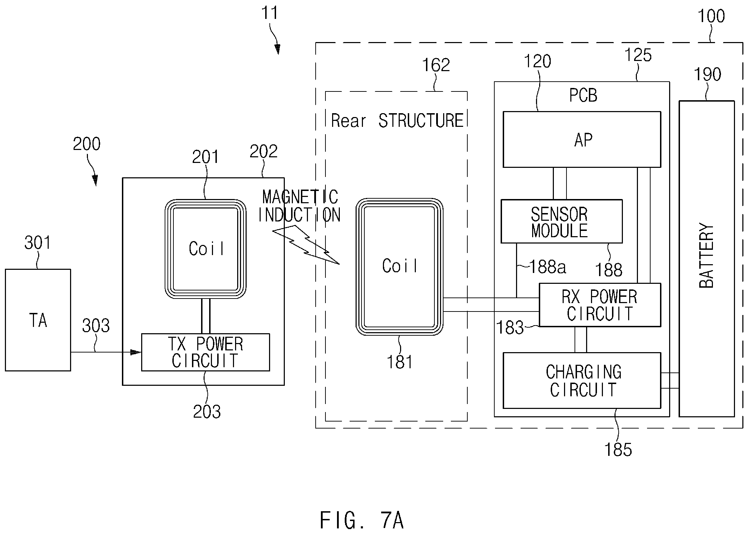

FIG. 7A is a block diagram illustrating a configuration of a wireless charging system according to various embodiments of the present disclosure.

Referring to FIG. 7A, a wireless charging system 11 according to an embodiment of the present disclosure may include a wireless charging device 200 and an electronic device 100.

The wireless charging device 200 may include the adaptor 301, the cable 303, and the wireless charging pad 202. The wireless charging pad 202 may include a case, the TX coil 201, and the TX power circuit 203. For example, the adaptor 301 and the cable 303 may be implemented as an integral type in the wireless charging device 200. Also, the cable 303 and the wireless charging pad 202 may be removably implemented in the wireless charging device 200. Therefore, in a state where the electronic device 100 is placed on the wireless charging pad 202, the adaptor 301 may connect to a power supply. If receiving power through the adaptor 301, the wireless charging device 200 may send a scan signal to search the electronic device 100. The sending of the scan signal may be performed at a predetermined period. The case of the wireless charging pad 202 may have, for example, a disk type (or a dish type). Alternatively, the case may be a polygon (e.g., a quadrangle). The TX power circuit 203 may output power, supplied through the cable 303, as a predetermined frequency waveform through the TX coil 201. A rear surface of the electronic device 100 may be placed on the wireless charging pad 202.

The electronic device 100 may include, for example, a rear structure 162, the RX coil 181, a printed circuit board (PCB) 125, the at least one processor 120 (e.g., an AP), the sensor module 188, the RX power circuit 183, the charging circuit 185, and the battery 190. In FIG. 7A, an embodiment of the present disclosure is exemplified as the electronic device 100 includes only the components associated with a wireless charging function. However, the scope of the present disclosure may not be limited thereto. For example, the electronic device 100 may further include components described with reference to FIG. 2.

In the electronic device 100, the RX coil 181 may be located on a certain position of an upper and lower portion of the rear structure 162. For example, a region corresponding to a position, where the RX coil 181 is disposed, in the rear structure 162 may be made of nonmetal or an electromagnetic wave penetration material. According to various embodiments of the present disclosure, the RX coil 181 may be disposed on a surface of the battery 190. The RX coil 181 may be implemented with a certain form (e.g., a rectangle) by a shape and a mechanical shape of the rear structure 162. The shape of this RX coil 181 may be changed based on design selection (e.g., may be changed to a circle or an oval, and the like). The processor 120, the sensor module 188, and the RX power circuit 183, and the charging circuit 185 may be disposed on the PCB 125.

The sensor module 188 may connect to the RX coil 181 and may detect a sensor signal (e.g., a capacitance change) generated by overlapping the RX coil 181 with the TX coil 201. For example, the sensor module 188 may have a first coil detection line 188a which may detect a signal line disposed between the RX coil 181 and the RX power circuit 183. The detected sensor signal may be sent to the processor 120. In this regard, the sensor module 188 may have a signal line, for sending a sensor signal, between the sensor module 188 and the processor 120.

The processor 120 may output guide information corresponding to the sensor signal to at least one of a display, an input and output interface, a lamp, or a vibration element. The at least one processor 120 may be, for example, at least one of a sensor signal collecting unit 187 or an information processing unit 189 included in the wireless charging module 180 of FIG. 3.

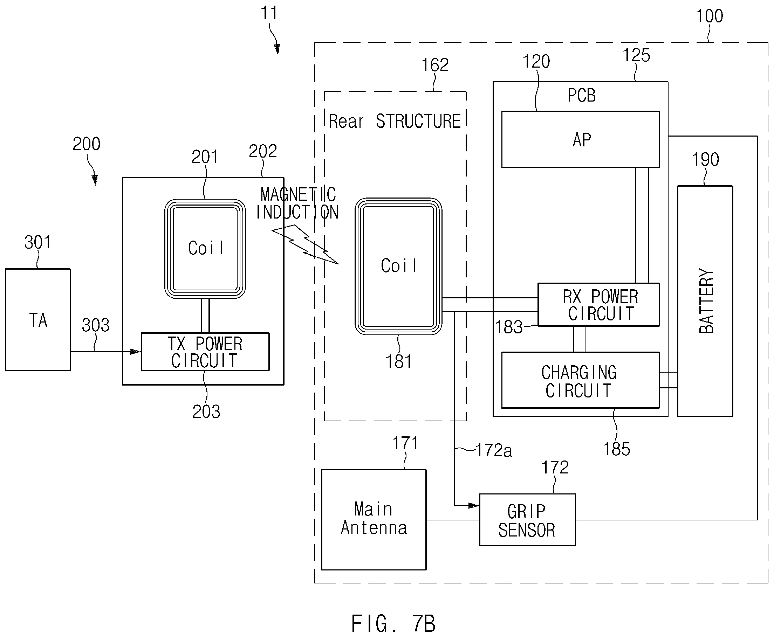

FIG. 7B is a block diagram illustrating a configuration of a wireless charging system according to various embodiments of the present disclosure.

Referring to FIG. 7B, the wireless charging system 11 according to an embodiment of the present disclosure may include the wireless charging device 200 and the electronic device 100.

The wireless charging device 200 may include the adaptor 301, the cable 303, and the wireless charging pad 202. The wireless charging pad 202 may include a case, the TX coil 201, and a TX power circuit 203. The wireless charging device 200 may include the same or similar components to those of a wireless charging device described with reference to FIG. 7A.

The electronic device 100 may include, for example, a rear structure 172, an RX coil 181, a PCB 125, a processor 120 (e.g., an AP), the RX power circuit 183, the charging circuit 185, and the battery 190. Also, the electronic device 100 may further include a main antenna 171 and a grip sensor 172.

The grip sensor 172 may be disposed at one side of the main antenna 171 and may detect a sensor signal based on a grip state of the electronic device 100. For example, the grip sensor 172 may senses a capacitance change of the main antenna 171 based on the grip state of the electronic device 100. According to an embodiment of the present disclosure, the grip sensor 172 may include a second coil detection line 172a connected with the RX coil 181. The grip sensor 172 may send a sensor signal, detected through the second coil detection line 172a, to the processor 120. The main antenna 171 may be provided to describe the grip sensor 172 and may be replaced with a sub-antenna or a sensor which may sense a grip state of the electronic device 100. Alternatively, according to various embodiments of the present disclosure, the grip sensor 172 may be replaced with a sensor, which may include a coil detection line connected with the RX coil 181 and may send a detected signal to the processor 120 (or an information processing unit and the like), among at least one sensor disposed in the electronic device 100.

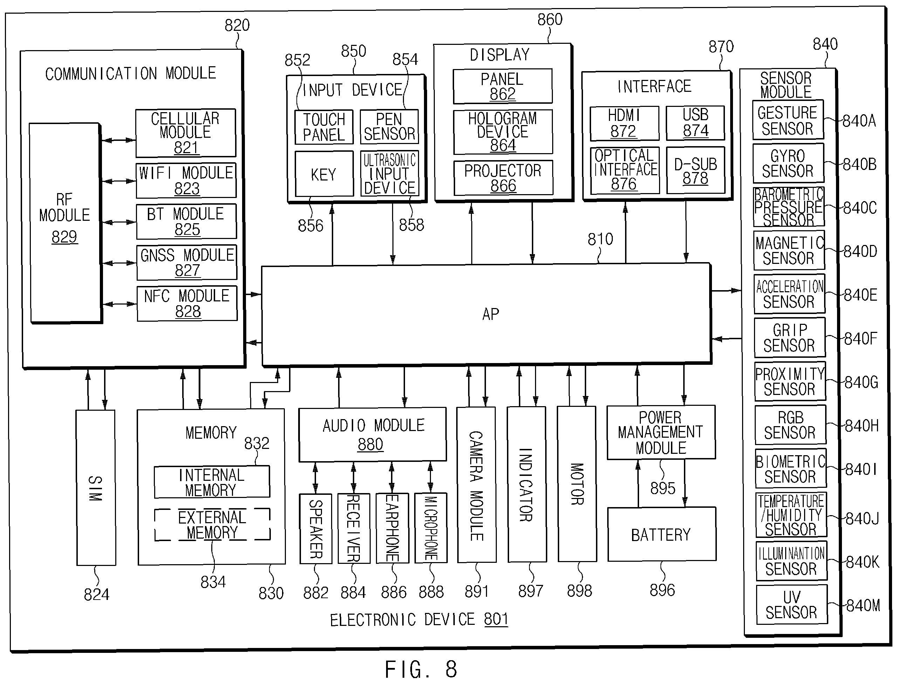

FIG. 8 is a block diagram illustrating a configuration of an electronic device according to an embodiment of the present disclosure.

Referring to FIG. 8, the electronic device 801 may include, for example, all or part of an electronic device described in the various embodiments of the present disclosure described above. The electronic device 801 may include at least one processor 810 (e.g., an AP), a communication module 820, a subscriber identification module (SIM) 824, a memory 830, a sensor module 840, an input device 850, a display 860, an interface 870, an audio module 880, a camera module 891, a power management module 895, a battery 896, an indicator 897, and a motor 898.

The processor 810 may drive, for example, an OS or an application program to control a plurality of hardware or software components connected thereto and may process and compute a variety of data. The processor 810 may be implemented with, for example, a system on chip (SoC). According to an embodiment of the present disclosure, the processor 810 may further include a graphics processing unit (GPU) (not shown) and/or an image signal processor (ISP) (not shown). The processor 810 may include at least some (e.g., a cellular module 821) of the components shown in FIG. 8. The processor 810 may load instructions or data received from at least one of other components (e.g., a non-volatile memory) into a volatile memory to process the data and may store various data in a non-volatile memory.

The communication module 820 may have the same or similar configuration to that of the communication interface 170 of FIG. 2. The communication module 820 may include, for example, the cellular module 821, a Wi-Fi module 823, a Bluetooth (BT) module 825, a global navigation satellite system (GNSS) module 827 (e.g., a global positioning system (GPS) module, a Glonass module, a Beidou module, or a Galileo module), a near field communication (NFC) module 828, and a radio frequency (RF) module 829. Additionally, the communication module 820 may further include a magnetic secure transmission (MST) module (not shown).

The cellular module 821 may provide, for example, a voice call service, a video call service, a text message service, or an Internet service, and the like through a communication network. According to an embodiment of the present disclosure, the cellular module 821 may identify and authenticate the electronic device 801 in a communication network using a SIM 824 (e.g., a SIM card). According to an embodiment of the present disclosure, the cellular module 821 may perform at least part of functions which may be provided by the processor 810. According to an embodiment of the present disclosure, the cellular module 821 may include a CP.

The Wi-Fi module 823, the BT module 825, the GNSS module 827, or the NFC module 828 may include, for example, a processor for processing data transmitted and received through the corresponding module. According to various embodiments of the present disclosure, at least some (e.g., two or more) of the cellular module 821, the Wi-Fi module 823, the BT module 825, the GNSS module 827, or the NFC module 828 may be included in one integrated chip (IC) or one IC package.

The RF module 829 may transmit and receive, for example, a communication signal (e.g., an RF signal). Though not shown, the RF module 829 may include, for example, a transceiver, a power amplifier module (PAM), a frequency filter, or a low noise amplifier (LNA), or an antenna, and the like. According to another embodiment of the present disclosure, at least one of the cellular module 821, the Wi-Fi module 823, the BT module 825, the GNSS module 827, or the NFC module 828 may transmit and receive an RF signal through a separate RF module.

The SIM 824 may include, for example, a card which includes a SIM and/or an embedded SIM. The SIM 824 may include unique identification information (e.g., an integrated circuit card identifier (ICCID)) or subscriber information (e.g., an international mobile subscriber identity (IMSI)).

The memory 830 (e.g., the memory 130 of FIG. 2) may include, for example, an embedded memory 832 or an external memory 834. The embedded memory 832 may include at least one of, for example, a volatile memory (e.g., a dynamic random access memory (DRAM), a static RAM (SRAM), a synchronous dynamic RAM (SDRAM), and the like), or a non-volatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory, and the like), a hard drive, or a solid state drive (SSD)).

The external memory 834 may include a flash drive, for example, a compact flash (CF), a secure digital (SD), a micro-SD, a mini-SD, an extreme digital (xD), a multimedia card (MMC), or a memory stick, and the like. The external memory 834 may operatively and/or physically connect with the electronic device 801 through various interfaces.

The electronic device 801 may further include a secure module (not shown). The secure module may be a module which has a relatively higher secure level than the memory 830 and may be a circuit which stores secure data and guarantees a protected execution environment. The secure module may be implemented with a separate circuit and may include a separate processor. The secure module may include, for example, an embedded secure element (eSE) which is present in a removable smart chip or a removable SD card or is embedded in a fixed chip of the electronic device 801. Also, the secure module may be driven by an OS different from the OS of the electronic device 801. For example, the secure module may operate based on a java card open platform (JCOP) OS.

The sensor module 840 may measure, for example, a physical quantity or may detect an operation state of the electronic device 801, and may convert the measured or detected information to an electric signal. The sensor module 840 may include at least one of, for example, a gesture sensor 840A, a gyro sensor 840B, a barometric pressure sensor 840C, a magnetic sensor 840D, an acceleration sensor 840E, a grip sensor 840F, a proximity sensor 840G, a color sensor 840H (e.g., red, green, blue (RGB) sensor), a biometric sensor 8401, a temperature/humidity sensor 840J, an illumination sensor 840K, or an ultraviolet (UV) sensor 840M. Additionally or alternatively, the sensor module 840 may further include, for example, an e-nose sensor (not shown), an electromyography (EMG) sensor (not shown), an electroencephalogram (EEG) sensor (not shown), an electrocardiogram (ECG) sensor (not shown), an infrared (IR) sensor (not shown), an iris sensor (not shown), and/or a fingerprint sensor (not shown), and the like. The sensor module 840 may further include a control circuit for controlling at least one or more sensors included therein. According to various embodiments of the present disclosure, the electronic device 801 may further include a processor configured to control the sensor module 840, as part of the processor 810 or to be independent of the processor 810. While the processor 810 is in a sleep state, the electronic device 801 may control the sensor module 840.

The input device 850 may include, for example, a touch panel 852, a (digital) pen sensor 854, a key 856, or an ultrasonic input unit 858. The touch panel 852 may use at least one of, for example, a capacitive type, a resistive type, an infrared type, or an ultrasonic type. Also, the touch panel 852 may further include a control circuit. The touch panel 852 may further include a tactile layer and may provide a tactile reaction to a user.

The (digital) pen sensor 854 may be, for example, part of the touch panel 852 or may include a separate sheet for recognition. The key 856 may include, for example, a physical button, an optical key, or a keypad. The ultrasonic input unit 858 may allow the electronic device 801 to detect a sound wave using a microphone (e.g., a microphone 888) and to verify data through an input tool generating an ultrasonic signal.

The display 860 (e.g., the display 160 of FIG. 2) may include a panel 862, a hologram device 864, or a projector 866. The panel 862 may include the same or similar configuration to that of the display 160. The panel 862 may be implemented to be, for example, flexible, transparent, or wearable. The panel 862 and the touch panel 852 may be integrated into one module. The hologram device 864 may show a stereoscopic image in a space using interference of light. The projector 866 may project light onto a screen to display an image. The screen may be positioned, for example, inside or outside the electronic device 801. According to an embodiment of the present disclosure, the display 860 may further include a control circuit for controlling the panel 862, the hologram device 864, or the projector 866.

The interface 870 may include, for example, a high-definition multimedia interface (HDMI) 872, a universal serial bus (USB) 874, an optical interface 876, or a D-subminiature 878. The interface 870 may be included in, for example, a communication interface 170 shown in FIG. 2. Additionally or alternatively, the interface 870 may include, for example, a mobile high definition link (MHL) interface, an SD card/MMC interface, or an infrared data association (IrDA) standard interface.

The audio module 880 may convert a sound and an electric signal in dual directions. At least part of components of the audio module 880 may be included in, for example, an input/output interface 150 shown in FIG. 2. The audio module 880 may process sound information input or output through, for example, a speaker 882, a receiver 884, an earphone 886, or the microphone 888, and the like.

The camera module 891 may be a device which captures a still image and a moving image. According to an embodiment of the present disclosure, the camera module 891 may include one or more image sensors (not shown) (e.g., a front sensor or a rear sensor), a lens (not shown), an ISP (not shown), or a flash (not shown) (e.g., an LED or a xenon lamp).

The power management module 895 may manage, for example, power of the electronic device 801. According to an embodiment of the present disclosure, though not shown, the power management module 895 may include a power management integrated circuit (PMIC), a charger IC or a battery or fuel gauge. The PMIC may have a wired charging method and/or a wireless charging method. The wireless charging method may include, for example, a magnetic resonance method, a magnetic induction method, or an electromagnetic method, and the like. An additional circuit for wireless charging, for example, a coil loop, a resonance circuit, or a rectifier, and the like may be further provided. The battery gauge may measure, for example, the remaining capacity of the battery 896 and voltage, current, or temperature thereof while the battery 896 is charged. The battery 896 may include, for example, a rechargeable battery or a solar battery.

The indicator 897 may display a specific state of the electronic device 801 or part (e.g., the processor 810) thereof, for example, a booting state, a message state, or a charging state, and the like. The motor 898 may convert an electric signal into mechanical vibration and may generate vibration or a haptic effect, and the like. Though not shown, the electronic device 801 may include a processing unit (e.g., a GPU) for supporting a mobile TV. The processing unit for supporting the mobile TV may process media data according to standards, for example, a digital multimedia broadcasting (DMB) standard, a digital video broadcasting (DVB) standard, or a mediaFloTM standard, and the like.

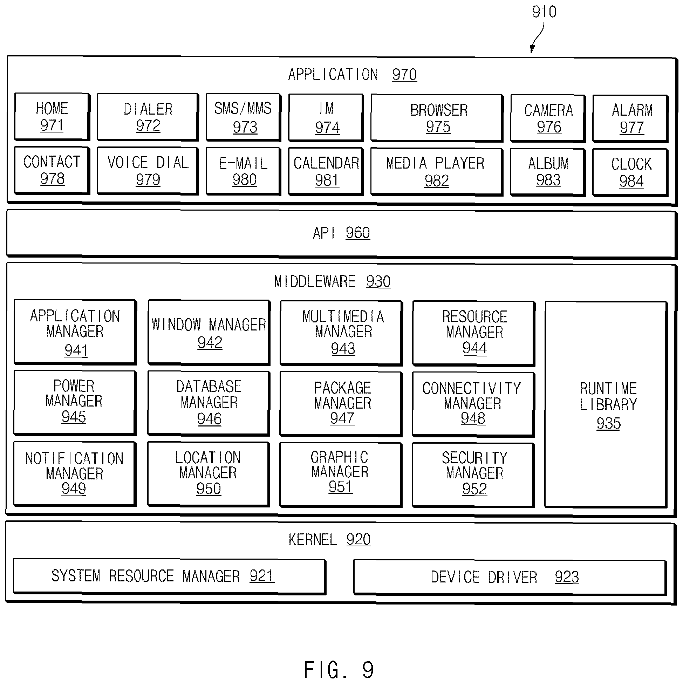

FIG. 9 is a block diagram illustrating a configuration of a program module according to an embodiment of the present disclosure.

Referring to FIG. 9, according to an embodiment of the present disclosure, a program module 910 (e.g., the program 140 of FIG. 2) may include an OS for controlling resources associated with an electronic device (e.g., the electronic device 100 of FIG. 2) and/or various applications (e.g., the application program 147 of FIG. 2) which are executed on the OS. The OS may be, for example, Android, iOS, Windows, Symbian, Tizen, or Bada, and the like.

The program module 910 may include a kernel 920, a middleware 930, an API 960, and/or an application 970. At least part of the program module 910 may be preloaded on the electronic device, or may be downloaded from an external electronic device (e.g., a first external electronic device, a second external electronic device, or a server, and the like).

The kernel 920 (e.g., the kernel 141 of FIG. 2) may include, for example, a system resource manager 921 and/or a device driver 923. The system resource manager 921 may control, assign, or collect, and the like system resources. According to an embodiment of the present disclosure, the system resource manager 921 may include a process management unit, a memory management unit, or a file system management unit, and the like. The device driver 923 may include, for example, a display driver, a camera driver, a BT driver, a shared memory driver, an USB driver, a keypad driver, a Wi-Fi driver, an audio driver, or an interprocess communication (IPC) driver.

The middleware 930 (e.g., the middleware 143 of FIG. 2) may provide, for example, functions the application 970 needs in common, and may provide various functions to the application 970 through the API 960 such that the application 970 efficiently uses limited system resources in the electronic device. According to an embodiment of the present disclosure, the middleware 930 (e.g., the middleware 143) may include at least one of a runtime library 935, an application manager 941, a window manager 942, a multimedia manager 943, a resource manager 944, a power manager 945, a database manager 946, a package manager 947, a connectivity manager 948, a notification manager 949, a location manager 950, a graphic manager 951, a security manager 952, and a payment manager (not shown).

The runtime library 935 may include, for example, a library module used by a compiler to add a new function through a programming language while the application 970 is executed. The runtime library 935 may perform a function about input and output management, memory management, or an arithmetic function.

The application manager 941 may manage, for example, a life cycle of at least one of the applications 970. The window manager 942 may manage graphical user interface (GUI) resources used on a screen of the electronic device. The multimedia manager 943 may ascertain a format necessary for reproducing various media files and may encode or decode a media file using a codec corresponding to the corresponding format. The resource manager 944 may manage source codes of at least one of the applications 970, and may manage resources of a memory or a storage space, and the like.

The power manager 945 may act together with, for example, a basic input/output system (BIOS) and the like, may manage a battery or a power source, and may provide power information necessary for an operation of the electronic device. The database manager 946 may generate, search, or change a database to be used in at least one of the applications 970. The package manager 947 may manage installation or update of an application distributed by a type of a package file.

The connectivity manager 948 may manage, for example, wireless connection such as Wi-Fi connection or BT connection, and the like. The notification manager 949 may display or notify events, such as an arrival message, an appointment, and proximity notification, by a method which is not disturbed to the user. The location manager 950 may manage location information of the electronic device. The graphic manager 951 may manage a graphic effect to be provided to the user or a user interface (UI) related to the graphic effect. The security manager 952 may provide all security functions necessary for system security or user authentication, and the like. According to an embodiment of the present disclosure, when the electronic device (e.g., the electronic device 100) has a phone function, the middleware 930 may further include a telephony manager (not shown) for managing a voice or video communication function of the electronic device. The payment manager may relay information for payment from the application 970 to the application 970 or the kernel 920. Also, the payment manager may send information, associated with payment, received from the external device in the electronic device or may send information stored in the electronic device to the external device.

The middleware 930 may include a middleware module which configures combinations of various functions of the above-described components. The middleware 930 may provide a module which specializes according to kinds of OSs to provide a differentiated function. Also, the middleware 930 may dynamically delete some of old components or may add new components.

The API 960 (e.g., the API 145 of FIG. 2) may be, for example, a set of API programming functions, and may be provided with different components according to OSs. For example, in case of Android or iOS, one API set may be provided according to platforms. In case of Tizen, two or more API sets may be provided according to platforms.

The application 970 (e.g., the application program 147 of FIG. 2) may include one or more of, for example, a home application 971, a dialer application 972, a short message service (SMS)/multimedia message service (MMS) application 973, an instant message (IM) application 974, a browser application 975, a camera application 976, an alarm application 977, a contact application 978, a voice dial application 979, an e-mail application 980, a calendar application 981, a media player application 982, an album application 983, a clock application 984, a payment application (not shown), a health care application (e.g., an application for measuring quantity of exercise or blood sugar, and the like), or an environment information application (e.g., an application for providing atmospheric pressure information, humidity information, or temperature information, and the like), and the like.

According to an embodiment of the present disclosure, the application 970 may include an application (hereinafter, for better understanding and ease of description, referred to as "information exchange application") for exchanging information between the electronic device (e.g., the electronic device 100) and an external electronic device (e.g., the first external electronic device or the second external electronic device). The information exchange application may include, for example, a notification relay application for transmitting specific information to the external electronic device or a device management application for managing the external electronic device.

For example, the notification relay application may include a function of transmitting notification information, which is generated by other applications (e.g., the SMS/MMS application, the e-mail application, the health care application, or the environment information application, and the like) of the electronic device, to the external electronic device (e.g., the first external electronic device or the second external electronic device). Also, the notification relay application may receive, for example, notification information from the external electronic device, and may provide the received notification information to the user of the electronic device.

The device management application may manage (e.g., install, delete, or update), for example, at least one (e.g., a function of turning on/off the external electronic device itself (or partial components) or a function of adjusting brightness (or resolution) of a display) of functions of the external electronic device (e.g., the first external electronic device or the second external electronic device) which communicates with the electronic device, an application which operates in the external electronic device, or a service (e.g., a call service or a message service) provided from the external electronic device.

According to an embodiment of the present disclosure, the application 970 may include an application (e.g., the health card application of a mobile medical device) which is preset according to attributes of the external electronic device (e.g., the first external electronic device or the second external electronic device). According to an embodiment of the present disclosure, the application 970 may include an application received from the external electronic device (e.g., the server, the first external electronic device, or the second external electronic device). According to an embodiment of the present disclosure, the application 970 may include a preloaded application or a third party application which may be downloaded from a server. Names of the components of the program module 910 according to various embodiments of the present disclosure may differ according to kinds of OSs.

According to various embodiments of the present disclosure, at least part of the program module 910 may be implemented with software, firmware, hardware, or at least two or more combinations thereof. At least part of the program module 910 may be implemented (e.g., executed) by, for example, a processor (e.g., the processor 120 of FIG. 2). At least part of the program module 910 may include, for example, a module, a program, a routine, sets of instructions, or a process, and the like for performing one or more functions.

Each of the above-mentioned elements of the electronic device according to various embodiments of the present disclosure may be configured with one or more components, and names of the corresponding elements may be changed according to the type of the electronic device. The electronic device according to various embodiments of the present disclosure may include at least one of the above-mentioned elements, some elements may be omitted from the electronic device, or other additional elements may be further included in the electronic device. Also, some of the elements of the electronic device according to various embodiments of the present disclosure may be combined with each other to form one entity, thereby making it possible to perform the functions of the corresponding elements in the same manner as before the combination.

The terminology "circuit" used herein may mean, for example, a unit including one of hardware, software, and firmware or two or more combinations thereof. The terminology "circuit" may be interchangeably used with, for example, terminologies "unit", "logic", "logical block", "component", or "module", and the like. The "circuit" may be a minimum unit of an integrated component or a part thereof. The "circuit" may be a minimum unit performing one or more functions or a part thereof. The "circuit" may be mechanically or electronically implemented. For example, the "circuit" may include at least one of an application-specific integrated circuit (ASIC) chip, field-programmable gate arrays (FPGAs), or a programmable-logic device, which is well known or will be developed in the future, for performing certain operations.

According to various embodiments of the present disclosure, at least part of a device (e.g., modules or the functions) or a method (e.g., operations) may be implemented with, for example, instructions stored in computer-readable storage media which have a program module. When the instructions are executed by a processor (e.g., the processor 120 of FIG. 2), one or more processors may perform functions corresponding to the instructions. The computer-readable storage media may be, for example, the memory 130 of FIG. 2.

The non-transitory computer-readable storage media may include a hard disc, a floppy disk, magnetic media (e.g., a magnetic tape), optical media (e.g., a compact disc ROM (CD-ROM) and a digital versatile disc (DVD)), magneto-optical media (e.g., a floptical disk), a hardware device (e.g., a ROM, a RAM, or a flash memory, and the like), and the like. Also, the program instructions may include not only mechanical codes compiled by a compiler but also high-level language codes which may be executed by a computer using an interpreter and the like. The above-mentioned hardware device may be configured to operate as one or more software modules to perform operations according to various embodiments of the present disclosure, and vice versa.

Modules or program modules according to various embodiments of the present disclosure may include at least one or more of the above-mentioned components, some of the above-mentioned components may be omitted, or other additional components may be further included therein. Operations executed by modules, program modules, or other elements may be executed by a successive method, a parallel method, a repeated method, or a heuristic method. Also, some of the operations may be executed in a different order or may be omitted, and other operations may be added.

According to various embodiments of the present disclosure, the electronic device may more accurately verify a wireless charging state.

While the present disclosure has been shown and described with reference to various embodiments thereof, it will be understood by those skilled in the art that various changes in form and details may be made therein without departing from the scope of the present disclosure as defined in the appended claims and their equivalents.

## Claims

1. An electronic device (100), comprising:
a memory (130, 830) configured to store at least one instruction; and
a processor (120, 810) configured to operatively connect with the memory and execute the at least one instruction,
wherein the at least one instruction executed by the processor is set to output guide information corresponding to a sensor signal generated in response to a state in which a receiving (RX) coil of the electronic device is arranged with an external device which supports wireless charging, and **characterized in that** the at least one instruction executed by the processor (120, 810) is set to detect a capacitance level corresponding to the state and to output guide information corresponding to the detected capacitance level between the electronic device and a transmission coil of the external device.

2. The electronic device (100) of claim 1, wherein the at least one instruction executed by the processor (120, 810) is set to output guide information indicating an error alignment state if the sensor signal does not meet a first condition.

3. The electronic device of claim 3, wherein the at least one instruction executed by the processor is set to send a message, for requesting to increase an amount of power supply, to the external device in response to the error alignment state.

4. The electronic device (100) of claim 1, wherein the at least one instruction executed by the processor (120, 810) is set to output guide information indicating a normal alignment state if the sensor signal meets a first condition.

5. The electronic device (100) of claim 1, wherein the at least one instruction executed by the processor (120, 810) is set to perform a wireless charging operation while outputting guide information, indicating a normal alignment state, during a time if the sensor signal meets a first condition.

6. The electronic device (100) of claim 1, wherein the at least one instruction executed by the processor (120, 810) is set to obtain the sensor signal if a signal associated with wireless charging is received from the external device.

7. The electronic device (100) of claim 1, wherein the at least one instruction executed by the processor (120, 810) is set to output information about the end of wireless charging if the sensor signal is less than a specific level.

8. The electronic device (100) of claim 1, wherein the RX coil is configured to receive an inductive power provided by a transmission (TX) coil of a wireless charging device comprised in the external device.

9. The electronic device (100) of claim 1, further comprising at least one of:
a display (160, 860) configured to display the guide information;
an input/output interface (150) configured to output an audio signal corresponding to the guide information;
a vibration element configured to output vibration of a pattern corresponding to the guide information; or
a lamp configured to be turned off based on a pattern corresponding to the guide information or be emitted with a color corresponding to the guide information.

10. A wireless charging operation method, the wireless charging operation method comprising:
receiving, by an electronic device (100), a wireless charging related signal from an external device adjacent to the electronic device;
obtaining, by the electronic device, a sensor signal, generated based on an arrangement state of a receiving (RX) coil of the electronic device associated with wireless charging with the adjacent external device, in response to receiving the wireless charging related signal;
outputting, by the electronic device, guide information based on the sensor signal, and **characterized in that** the outputting comprises setting to detect a capacitance level corresponding to the state and to output guide information corresponding to the detected capacitance level between the electronic device and a transmission coil of the external device.

11. The method of claim 10, wherein the outputting of the guide information comprises:
outputting guide information indicating an error alignment state, if the sensor signal does not meet a first condition, sending a message, for requesting to increase an amount of power supply, to the external device in response to the error alignment state, or
outputting guide information indicating a normal alignment state, if the sensor signal meets a first condition.

12. The method of claim 10, further comprising one of:
performing a wireless charging operation while outputting guide information, indicating a normal alignment state, during a time, if the sensor signal meets a first condition, or
outputting information about the end of wireless charging, if the sensor signal is less than a specific level.

13. The method of claim 10, further comprises at least one of:
outputting display information corresponding to the guide information;
outputting an audio signal corresponding to the guide information;
outputting vibration of a pattern corresponding to the guide information;
turning on/off a lamp based on a pattern corresponding to the guide information;
emitting the lamp using a color corresponding to the guide information; or
sending the guide information to an external electronic device in which a communication channel is established.

## Patentansprüche

1. Elektronische Vorrichtung (100), umfassend:
einen Speicher (130, 830), der konfiguriert ist, mindestens eine Anweisung zu speichern; und
einen Prozessor (120, 810), der konfiguriert ist, betriebswirksam mit dem Speicher verbunden zu werden und die mindestens eine Anweisung auszuführen,
wobei die mindestens eine Anweisung, die vom Prozessor ausgeführt wird, derart eingestellt ist, dass sie Führungsinformationen entsprechend einem Sensorsignal ausgibt, das als Reaktion auf einen Zustand generiert wird, in dem eine Empfangs- (RX) -Spule der elektronischen Vorrichtung mit einer externen Vorrichtung zum Unterstützen von drahtlosem Laden angeordnet ist, und
**dadurch gekennzeichnet, dass**
die mindestens eine Anweisung, die vom Prozessor (120, 810) ausgeführt wird, derart eingestellt, dass sie einen dem Zustand entsprechenden Kapazitätspegel erkennt und Führungsinformationen entsprechend dem erkannten Kapazitätspegel zwischen der elektronischen Vorrichtung und einer Übertragungsspule der externen Vorrichtung ausgibt.

2. Elektronische Vorrichtung (100) nach Anspruch 1, wobei die mindestens eine Anweisung, die vom Prozessor (120, 810) ausgeführt wird, derart eingestellt ist, dass sie Führungsinformationen ausgibt, die einen Fehlerausrichtungszustand anzeigen, wenn das Sensorsignal eine erste Bedingung nicht erfüllt.

3. Elektronische Vorrichtung nach Anspruch 1, wobei die mindestens eine Anweisung, die vom Prozessor ausgeführt wird, derart eingestellt ist, dass sie eine Nachricht zum Anfordern einer Erhöhung einer Energieversorgungsmenge an die externe Vorrichtung als Antwort auf den Fehlerausrichtungszustand sendet.

4. Elektronische Vorrichtung (100) nach Anspruch 1, wobei die mindestens eine Anweisung, die vom Prozessor (120, 810) ausgeführt wird, derart eingestellt ist, dass sie Führungsinformationen ausgibt, die einen Fehlerausrichtungszustand anzeigen, wenn das Sensorsignal eine erste Bedingung nicht erfüllt.

5. Elektronische Vorrichtung (100) nach Anspruch 1, wobei die mindestens eine Anweisung, die vom Prozessor (120, 810) ausgeführt wird, derart eingestellt ist, dass sie einen drahtlosen Ladevorgang ausführt, während sie Führungsinformationen ausgibt, die einen normalen Ausrichtungszustand anzeigen, während einer Zeit, wenn das Sensorsignal eine erste Bedingung erfüllt.

6. Elektronische Vorrichtung (100) nach Anspruch 1, wobei die mindestens eine Anweisung, die vom Prozessor (120, 810) ausgeführt wird, derart eingestellt ist, dass sie das Sensorsignal erhält, wenn ein Signal, das dem drahtlosen Laden zugeordnet ist, von der externen Vorrichtung empfangen wird.

7. Elektronische Vorrichtung (100) nach Anspruch 1, wobei die mindestens eine Anweisung, die vom Prozessor (120, 810) ausgeführt wird, derart eingestellt ist, dass sie Informationen über das Ende des drahtlosen Ladens ausgibt, wenn das Sensorsignal geringer als ein spezifischer Pegel ist.

8. Elektronische Vorrichtung (100) nach Anspruch 1, wobei die RX-Spule konfiguriert ist, eine induktive Leistung zu empfangen, die von einer Übertragungs- (TX) -Spule einer drahtlosen Ladevorrichtung bereitgestellt wird, die in der externen Vorrichtung enthalten ist.

9. Elektronische Vorrichtung (100) nach Anspruch 1, ferner umfassend mindestens eines von:
einer Anzeige (160, 860), die konfiguriert ist, die Führungsinformationen anzuzeigen;
einer Eingabe/Ausgabe-Schnittstelle (150), die konfiguriert ist, ein Audiosignal auszugeben, das den Führungsinformationen entspricht;
eines Vibrationselements, das konfiguriert ist, eine Vibration eines Musters auszugeben, das den Führungsinformationen entspricht; oder
einer Lampe, die konfiguriert ist, basierend auf einem Muster ausgeschaltet zu werden, das den Führungsinformationen entspricht, oder mit einer Farbe emittiert zu werden, die den Führungsinformationen entspricht.

10. Drahtloses Ladebetriebsverfahren, wobei das drahtlose Ladebetriebsverfahren Folgendes umfasst:
Empfangen, von einer elektronischen Vorrichtung (100), eines drahtlosen ladebezogenen Signals von einer externen Vorrichtung benachbart zu der elektronischen Vorrichtung;
Erhalten, von der elektronischen Vorrichtung, eines Sensorsignals, das auf der Grundlage eines Anordnungszustands einer Empfangs- (RX) -Spule der elektronischen Vorrichtung generiert wird, die dem drahtlosen Laden mit der benachbarten externen Vorrichtung zugeordnet ist, als Antwort auf das Empfangen des drahtlosen ladebezogenen Signals;
Ausgeben, von der elektronischen Vorrichtung, von Führungsinformationen auf der Grundlage des Sensorsignals, und
**dadurch gekennzeichnet, dass**
das Ausgeben das Einstellen umfasst, um einen Kapazitätspegel zu erkennen, der dem Zustand entspricht, und Führungsinformationen, die dem erkannten Kapazitätspegel zwischen der elektronischen Vorrichtung und einer Übertragungsspule der externen Vorrichtung entsprechen, auszugeben.

11. Verfahren nach Anspruch 10, wobei das Ausgeben der Führungsinformationen ferner Folgendes umfasst:
Ausgeben von Führungsinformationen, die einen Fehlerausrichtungszustand anzeigen, wenn das Sensorsignal eine erste Bedingung nicht erfüllt, Senden einer Nachricht zum Anfordern einer Erhöhung einer Energieversorgungsmenge an die externe Vorrichtung als Antwort auf den Fehlerausrichtungszustand oder
Ausgeben von Führungsinformationen, die einen normalen Ausrichtungszustand anzeigen, wenn das Sensorsignal eine erste Bedingung erfüllt.

12. Verfahren nach Anspruch 10, ferner umfassend eines von:
Ausführen eines drahtlosen Ladevorgangs während des Ausgebens von Führungsinformationen, die einen normalen Ausrichtungszustand anzeigen, während einer Zeit, wenn das Sensorsignal eine erste Bedingung erfüllt, oder
Ausgeben von Informationen über das Ende des drahtlosen Ladens, wenn das Sensorsignal unter einem bestimmten Pegel liegt.

13. Verfahren nach Anspruch 10, ferner umfassend mindestens eines von:
Ausgeben von Anzeigeinformationen, die den Führungsinformationen entsprechen;
Ausgeben eines Audiosignals, das den Führungsinformationen entspricht;
Ausgeben einer Vibration eines Musters, das den Führungsinformationen entspricht;
Ein-/Ausschalten einer Lampe basierend auf einem Muster, das den Führungsinformationen entspricht;
Emittieren der Lampe unter Verwendung einer Farbe, die den Führungsinformationen entspricht; oder
Senden der Führungsinformationen an eine externe elektronische Vorrichtung, in der ein Kommunikationskanal aufgebaut ist.

## Revendications

1. Dispositif électronique (100), comprenant :
une mémoire (130, 830) configurée pour mémoriser au moins une instruction ; et
un processeur (120, 810) configuré pour se raccorder, de manière opérationnelle, à la mémoire et exécuter l'au moins une instruction,
dans lequel l'au moins une instruction exécutée par le processeur est réglée pour délivrer des informations de guidage correspondant à un signal de capteur généré en réponse à un état dans lequel une bobine de réception (RX) du dispositif électronique est agencée avec un dispositif externe prenant en charge un chargement sans fil, et
**caractérisé en ce que**
l'au moins une instruction exécutée par le processeur (120, 810) est réglée pour détecter un niveau de capacité correspondant à l'état et pour délivrer des informations de guidage correspondant au niveau de capacité détecté entre le dispositif électronique et une bobine de transmission du dispositif externe.

2. Dispositif électronique (100) selon la revendication 1, dans lequel l'au moins une instruction exécutée par le processeur (120, 810) est réglée pour délivrer des informations de guidage indiquant un état d'alignement d'erreur si le signal de capteur ne remplit pas une première condition.

3. Dispositif électronique selon la revendication 1, dans lequel l'au moins une instruction exécutée par le processeur est réglée pour envoyer un message, pour demander une augmentation d'une quantité d'alimentation électrique, au dispositif externe en réponse à l'état d'alignement d'erreur.

4. Dispositif électronique (100) selon la revendication 1, dans lequel l'au moins une instruction exécutée par le processeur (120, 810) est réglée pour délivrer des informations de guidage indiquant un état d'alignement normal si le signal de capteur remplit une première condition.

5. Dispositif électronique (100) selon la revendication 1, dans lequel l'au moins une instruction exécutée par le processeur (120, 810) est réglée pour effectuer une opération de chargement sans fil tout en délivrant des informations de guidage, indiquant un état d'alignement normal, pendant un temps si le signal de capteur remplit une première condition.

6. Dispositif électronique (100) selon la revendication 1, dans lequel l'au moins une instruction exécutée par le processeur (120, 810) est réglée pour obtenir le signal de capteur si un signal associé à un chargement sans fil est reçu en provenance du dispositif externe.

7. Dispositif électronique (100) selon la revendication 1, dans lequel l'au moins une instruction exécutée par le processeur (120, 810) est réglée pour délivrer des informations relatives à la fin d'un chargement sans fil si le signal de capteur est inférieur à un niveau spécifique.

8. Dispositif électronique (100) selon la revendication 1, dans lequel la bobine RX est configurée pour recevoir une puissance inductive fournie par une bobine de transmission (TX) d'un dispositif de chargement sans fil compris dans le dispositif externe.

9. Dispositif électronique (100) selon la revendication 1, comprenant en outre au moins l'un de :
un affichage (160, 860) configuré pour afficher les informations de guidage ;
une interface d'entrée/sortie (150) configurée pour délivrer un signal audio correspondant aux informations de guidage ;
un élément de vibration configuré pour délivrer une vibration d'un motif correspondant aux informations de guidage ; ou
un voyant configuré pour être éteint sur la base d'un motif correspondant aux informations de guidage ou pour être allumé avec une couleur correspondant aux informations de guidage.

10. Procédé d'opération de chargement sans fil, le procédé d'opération de chargement sans fil comprenant :
la réception, par un dispositif électronique (100), d'un signal relatif à un chargement sans fil en provenance d'un dispositif externe adjacent au dispositif électronique ;
l'obtention, par le dispositif électronique, d'un signal de capteur, généré sur la base d'un état d'agencement d'une bobine de réception (RX) du dispositif électronique associé à un chargement sans fil avec le dispositif externe adjacent, en réponse à la réception du signal relatif à un chargement sans fil ;
la délivrance, par le dispositif électronique, d'informations de guidage sur la base du signal de capteur, et
**caractérisé en ce que** la délivrance comprend le réglage pour détecter un niveau de capacité correspondant à l'état et pour délivrer des informations de guidage correspondant au niveau de capacité détecté entre le dispositif électronique et une bobine de transmission du dispositif externe.

11. Procédé selon la revendication 10, dans lequel la délivrance des informations de guidage comprend :
la délivrance d'informations de guidage indiquant un état d'alignement d'erreur, si le signal de capteur ne remplit pas une première condition, l'envoi d'un message, pour demander une augmentation d'une quantité d'alimentation électrique, au dispositif externe en réponse à l'état d'alignement d'erreur, ou
la délivrance d'informations de guidage indiquant un état d'alignement normal, si le signal de capteur remplit une première condition.

12. Procédé selon la revendication 10, comprenant en outre l'une de :
l'exécution d'une opération de chargement sans fil tout en délivrant des informations de guidage, indiquant un état d'alignement normal, pendant un temps, si le signal de capteur remplit une première condition, ou
la délivrance d'informations relatives à la fin d'un chargement sans fil, si le signal de capteur est inférieur à un niveau spécifique.

13. Procédé selon la revendication 10, comprenant en outre au moins l'une de :
la délivrance d'informations d'affichage correspondant aux informations de guidage ;
la délivrance d'un signal audio correspondant aux informations de guidage ;
la délivrance d'une vibration d'un motif correspondant aux informations de guidage ;
l'éclairage/l'extinction d'un voyant sur la base d'un motif correspondant aux informations de guidage ;
l'allumage du voyant en utilisant une couleur correspondant aux informations de guidage ; ou
l'envoi des informations de guidage à un dispositif électronique externe dans lequel un canal de communication est établi.
